# EUROPÄISCHE PATENTSCHRIFT

(11) **EP 2 051 880 B1**
(45) Veröffentlichungstag und Bekanntmachung des Hinweises auf die Patenterteilung: **18.04.2012**
(21) Anmeldenummer: 07786618.4
(22) Anmeldetag: 08.08.2007
(51) Int. Cl.: B60R 19/24, B62D 25/08, B62D 65/16

(54) **KRAFTFAHRZEUG MIT ZUMINDEST EINEM LÄNGSTRÄGER**
MOTOR VEHICLE WITH AT LEAST ONE LONGITUDINAL MEMBER
VÉHICULE AUTOMOBILE DOTÉ D'AU MOINS UN LONGERON

(30) Priorität: 17.08.2006 DE 102006038674
(43) Veröffentlichungstag der Anmeldung: 29.04.2009
(73) Patentinhaber: Bayerische Motoren Werke Aktiengesellschaft, 80809 München (DE)
(72) Erfinder: DENGL, Detlev, 81379 München (DE); BARTHELS, Michael, 80469 München (DE); ZÖLLNER, Christian, 90599 Dietenhofen (DE)
(86) Internationale Anmeldenummer: PCT/EP2007/007001
(87) Internationale Veröffentlichungsnummer: WO 2008/019788

(56) Entgegenhaltungen:
- WO-A-2006/114279
- DE-A1- 2 105 090
- DE-A1-102005 021 661
- DE-B3-102005 021 663

## Beschreibung

Die Erfindung betrifft ein Kraftfahrzeug mit zumindest einem Längsträger, an dessen Ende ein Stoßfänger, ein Front- oder ein Heckmodul angebracht ist.

Aus der gattungsgemäßen DE 10 2005 021 663 B3 ist bereits ein Kraftfahrzeug mit einem hohlen Längsträger bekannt, an dessen Ende eine Crashbox angebracht ist, wobei die Crashbox einen Befestigungsabschnitt aufweist, der formschlüssig in den Endbereich des hohlen Längsträgers eingeschoben ist.

Ferner ist aus der DE 196 33 910 A1 ein Adapter zur Aufnahme eines Stoßfängers eines Kraftfahrzeugs bekannt, dessen Flansch mit dem vorderen Ende eines Motorträgers über einen Teil der Höhe der Seitenwände des Motorträgers verschweißt ist.

Ferner ist aus der DE 196 33 906 A1 ein Verfahren zur Reparatur eines beschädigten Motorträgers einer Kraftfahrzeugkarosserie bekannt. In dem Verfahren wird der vordere Abschnitt des Motorträgers durch einen ebenen, winkligen Schnitt vom Motorträger abgetrennt. Auf den verbleibenden Stumpf des Motorträgers wird ein Austauschträger angesetzt. Am Austauschträger sind an jeweils gegenüberliegenden Wänden Befestigungslaschen angeschweißt. Der Stumpf des Motorträgers wird mit Bohrungen versehen, die dem Lochbild der Befestigungslaschen entsprechen. Somit kann der Austauschträger über Schrauben oder Nieten, die die Laschen und die Seitenwände durchsetzen, mit dem Motorträger ohne Reparaturschweißung verbunden werden.

Aufgabe der Erfindung ist es, ein Kraftfahrzeug mit zumindest einem Längsträger zu schaffen, an dessen Ende ein Stoßfänger, ein Front- oder ein Heckmodul auf einfache Weise angebracht ist.

Diese Aufgabe wird mit einem Kraftfahrzeug mit zumindest einem Längsträger mit den Merkmalen des Patentanspruchs 1 gelöst.

Erfindungsgemäß weist ein Kraftfahrzeug zumindest einen hohlen Längsträger auf, an dessen Ende ein Stoßfänger, ein Front- oder ein Heckmodul angebracht ist. Der Stoßfänger, das Front- oder das Heckmodul weisen einen Befestigungsabschnitt auf, der formschlüssig in den Endbereich des hohlen Längsträgers eingeschoben ist. Der Überlappungsbereich von Befestigungsabschnitt und Längsträger ist dabei von zumindest drei Schrauben in Fahrzeugquerrichtung durchsetzt. Zwischen den Köpfen der Schrauben und dem Längsträger ist jeweils eine Unterlegscheibe vorgesehen, wobei die Unterlegscheiben fest miteinander verbunden sind. Dadurch ist kein zusätzlicher Adapter mehr erforderlich, der am Ende des Längsträgers befestigt ist und zur Aufnahme des Befestigungsabschnitts dient. Der größte Vorteil, der sich aus dem Entfall des Adapters ergibt, ist der Bauraumgewinn. Bei den meisten heutigen Fahrzeugen ist der Bauraum zumindest im Motorraum außerordentlich knapp, sodass jeder Zugewinn an Bauraum die Unterbringung aller Aggregate im Motorraum deutlich erleichtert. Zudem geht der Entfall des Adapters einher mit einem geringeren Gewicht des Fahrzeugs und mit geringeren Herstellkosten. Es kann auch ein vollständig vormontiertes Front- oder Heckmodul erfindungsgemäß an zumindest einem Längsträger befestigt werden, da dieses mit seinem Befestigungsabschnitt nur in den Längsträger eingeschoben werden muss. Die seitlichen Verschraubungsstellen sind gut zugänglich. Bei einer konventionellen Lösung mit einem Adapter dagegen kann ein vollständig komplettiertes Front- oder Heckmodul nicht montiert werden, da die Verschraubungsstellen am Adapter durch das Front- oder Heckmodul hindurch nicht oder nicht ausreichend gut zugänglich sind. Die Montage eines komplett vormontierten Front- oder Heckmoduls hat zwei wesentliche Vorteile: So reduziert sich die zur Montage benötigte Zeit an der Hauptmontagelinie des Fahrzeugs, und das Front- oder Heckmodul kann aufgrund der separaten Vormontage ein optimiertes Fugenbild aufweisen. Auch erhöht sich die Designfreiheit des Front- oder Heckmoduls.

Günstigerweise ist die zumindest eine Schraube auf der einem Kopf der Schraube gegenüberliegenden Seite des Längsträgers mit zumindest einer Mutter gesichert. Dadurch ist sichergestellt, dass die Schraube, die den Befestigungsabschnitt im Längsträger hält, nicht versehentlich herausrutschen kann. Bevorzugt sind in den Befestigungsabschnitt beidseitig Buchsen eingesetzt, durch die die Schraube geführt ist. Dadurch werden zwischen der Schraube und dem Befestigungsabschnitt wirkende Kräfte gleichmäßiger verteilt. Vorteilhafterweise bestehen dabei die Buchsen aus einem Material mit einer höheren Festigkeit als der Längsträger. Dadurch drückt sich der Kragen der Buchsen, mit dem sie außen am Befestigungsabschnitt anliegen, beim Verschrauben in den Längsträger hinein, sodass der Reibwert zwischen der formschlüssig im Befestigungsabschnitt eingesetzten Buchse und dem Längsträger erhöht wird.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine perspektivische Ansicht eines vorderen Endabschnitts eines Motorträgers, an dem ein Stoßfänger angebracht ist,
- Fig. 2: einen Querschnitt durch den Motorträger von Fig. 1 und
- Fig. 3: eine perspektivische Ansicht eines vorderen Endabschnitts eines Motorträgers, an dem ein Stoßfänger angebracht ist, wobei der Stoßfänger im Anbindungsbereich verstärkt ist.

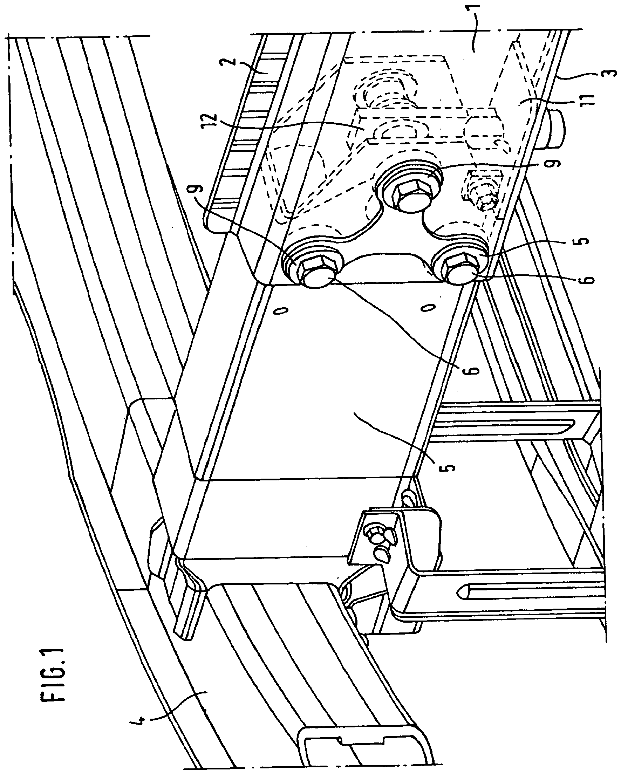

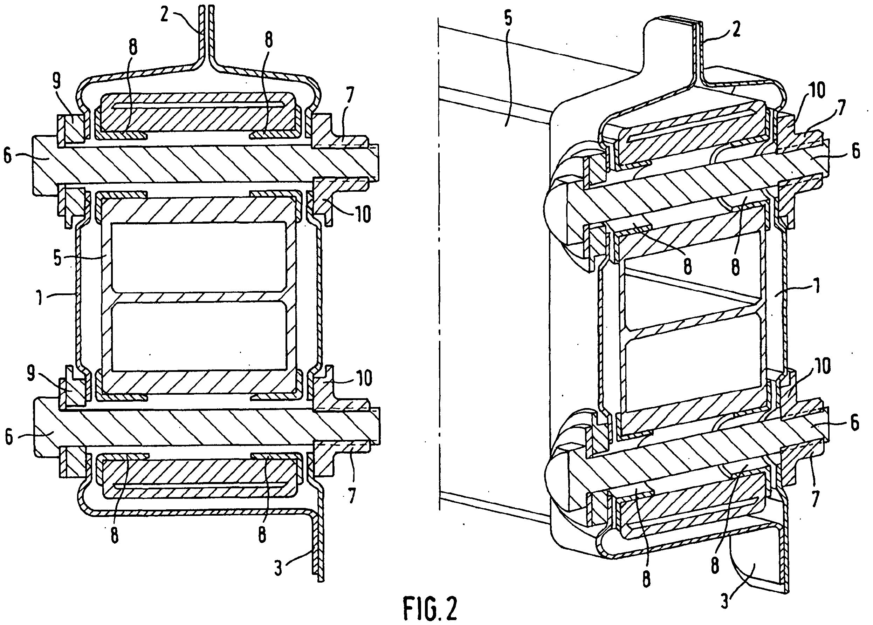

In Fig. 1 ist der vordere Endbereich eines Motorträgers 1 einer Kraftfahrzeugkarosserie gezeigt, der in Schalenbauweise aus zwei Blechschalen gebildet ist, die über einen oberen Flansch 2 und einen unteren Flansch 3 miteinander verbunden sind und einen Hohlraum umschließen. An dem Motorträger 1 ist ein Stoßfänger 4 angebracht. Dazu weist der Stoßfänger 4 einen - in Fahrtrichtung gesehen - nach hinten ragenden Befestigungsabschnitt 5 auf, der mit seinem hinteren Bereich formschlüssig in den Hohlraum des Motorträgers 1 von vorne hinein geschoben ist. In der Längsrichtung des Motorträgers 1 ist der Befestigungsabschnitt 5 durch drei Schrauben 6 gesichert, die in Fahrzeugquerrichtung durch den Überlappungsbereich zwischen Motorträger 1 und Befestigungsabschnitt 5 hindurchgeführt sind. Die Schrauben 6 weisen auf der einen Seite des Motorträgers 1 jeweils einen Schraubenkopf auf, auf der anderen Seite sind sie jeweils mit einer Mutter 7 gesichert, wie es in Fig. 2 gut erkennbar ist. Die Muttern 7 verhindern, dass die Schrauben 6 herausrutschen können.

In die Löcher im Befestigungsabschnitt 5 des Stoßfängers 4, durch die die Schrauben 6 hindurch gesteckt sind, sind beidseitig Buchsen 8 eingesetzt, die jeweils mit ihrem Kragen außen am Befestigungsabschnitt 5 anliegen. Die Buchsen 8 verteilen die zwischen den Schrauben 6 und dem Befestigungsabschnitt 5 wirkenden Kräfte gleichmäßig. Zudem ist zwischen den Köpfen der Schrauben 6 und dem Motorträger 1 jeweils eine Unterlegscheibe 9 vorgesehen, wobei die Unterlegscheiben 9 über Verbindungsstücke fest miteinander verbunden sind. Auch auf der anderen Seite des Motorträgers 1 sind zwischen diesem und den Muttern 7 jeweils Unterlegscheiben 10 vorgesehen, wobei die Unterlegscheiben 10 einteilig mit den Muttern 7 ausgeführt sind und miteinander über Verbindungsstücke fest verbunden sind. Durch die beidseitig jeweils miteinander verbundenen Unterlegscheiben 9 und 10 werden alle drei Schraubverbindungen relativ gleichmäßig belastet. Eventuell nur in eine Schraubverbindung eingeleitete hohe Kräfte werden so auf die anderen beiden Schraubverbindungen mit verteilt.

Im Motorträger 1 ist an eine der beiden Schalen zumindest ein Halter 11 mit einer Öse 12 angeschweißt. Die hintere der drei Schrauben 6 durchsetzt im Motorträger 1 die Öse 12. Damit kann in Richtung des Motorträgers 1 über die Öse 12 zusätzlich Kraft von der einen Schraube 6 auf den Motorträger 1 übertragen werden.

Bei einem Unfall des Kraftfahrzeugs werden häufig in den Stoßfänger 4 hohe Kräfte eingeleitet. Zum Abbau dieser Kräfte ist der Befestigungsabschnitt 5 zugleich als Deformationskörper ausgelegt, der sich aufgrund der hohen Kräfte gezielt verformt und so einen Teil der Kräfte abbaut. Die restlichen Kräfte müssen über die Schrauben 6 in den Motorträger 1 eingeleitet werden. Dabei sollen die Schrauben 6 möglichst nicht auf Scherung beansprucht werden. Vielmehr sollen die Schrauben 6 den Motorträger 1 so fest gegen den Befestigungsabschnitt 5 drücken, dass dieser aufgrund der Reibkräfte zum Motorträger 1 sich nicht relativ zu diesem verschieben kann. Zur Erhöhung der Reibkräfte weist der Kragen der Buchsen 8 jeweils auf der dem Motorträger 1 zugewandten Seite Riefen auf. Da die Buchsen 8 aus einem Material besteht, das höherfester als das Material des Motorträgers 1 ist, drücken sich die Riefen prägend in den Motorträger 1 beim Verschrauben hinein. Dadurch erhöht sich der Reibwert zwischen dem Befestigungsabschnitt 5 bzw. den Buchsen 8 und dem Motorträger 1.

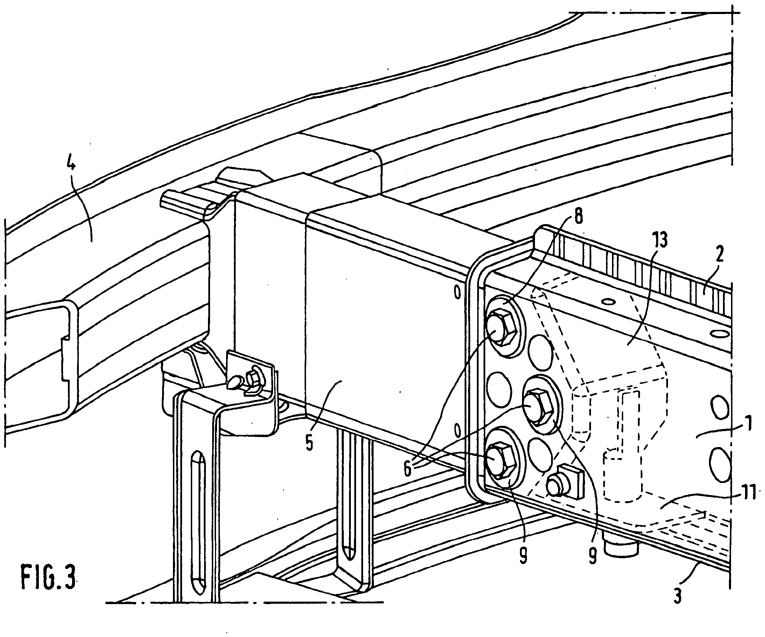

In der Fig. 3 ist eine alternative Ausführungsform zur Anbindung eines Stoßfängers 4 an einen Motorträger 1 dargestellt. Dabei weisen alle Bauteile, die einem bereits in Fig. 1 oder Fig. 2 gezeigten Bauteil entsprechen, die gleichen Bezugsziffern auf. Der Endbereich des Motorträgers 1, in den in der Befestigungsabschnitt 5 eingeschoben ist, ist durch einen tiefgezogenen Blechtopf 13 verstärkt, der den Endbereich des Motorträgers 1 eingesetzt ist. Der Befestigungsabschnitt 5 ist in den Blechtopf 13 eingeschoben. Der Blechtopf 13 erhöht im Bereich der Verschraubungen die Wandstärke des Motorträgers 1, sodass die Gefahr geringer ist, dass die Schrauben 6 aus den Löchern im Motorträger 1 ausreißen können. Der Halter 11 kann bei dieser Ausführung keine Öse aufweisen, die von einer Schraube durchsetzt wird, da der Blechtopf 13 im Wege ist. Dafür ist der Halter 11 mit dem Blechtopf 13 verschweißt und erhöht so ebenfalls die Steifigkeit der Verbindung zwischen dem Befestigungsabschnitt 5 und dem Motorträger 1.

## Patentansprüche

1. Kraftfahrzeug mit zumindest einem hohlen Längsträger (1), an dessen Ende ein Stoßfänger (4), ein Front- oder ein Heckmodul angebracht ist, wobei der Stoßfänger (4), das Front- oder das Heckmodul einen Befestigungsabschnitt (5) aufweist, der formschlüssig in den Endbereich des hohlen Längsträgers (1) eingeschoben ist, wobei der Überlappungsbereich von Befestigungsabschnitt (5) und Längsträger (1) von zumindest einer Schraube (6) in Fahrzeugquerrichtung durchsetzt ist, **dadurch gekennzeichnet, dass** der Überlappungsbereich von Befestigungsabschnitt (5) und Längsträger (1) von zumindest drei Schrauben (6) in Fahrzeugquerrichtung durchsetzt ist, wobei zwischen den Köpfen der Schrauben (6) und dem Längsträger (1) jeweils eine Unterlegscheibe (9) vorgesehen ist, wobei die Unterlegscheiben (9) fest miteinander verbunden sind.

2. Kraftfahrzeug nach Anspruch 1, **dadurch gekennzeichnet, dass** die Schraube (6) auf der einem Kopf der Schraube (6) gegenüberliegenden Seite des Längsträgers (1) mit zumindest einer Mutter (7) gesichert ist.

3. Kraftfahrzeug nach Anspruch 1 oder 2, **dadurch gekennzeichnet, dass** in den Befestigungsabschnitt (5) beidseitig Buchsen (8) eingesetzt sind, durch die die Schraube (6) geführt ist.

4. Kraftfahrzeug nach Anspruch 3, **dadurch gekennzeichnet, dass** die Buchsen (8) aus einem Material mit höherer Festigkeit als der Längsträger (1) bestehen.

5. Kraftfahrzeug nach Anspruch 3 oder 4, **dadurch gekennzeichnet, dass** die Buchsen (8) einen Kragen aufweisen, mit dem sie außen am Befestigungsabschnitt (5) anliegen.

6. Kraftfahrzeug nach Anspruch 5, **dadurch gekennzeichnet, dass** der Kragen der Buchsen (8) auf einer Seite oder beidseitig Riefen aufweisen.

7. Kraftfahrzeug nach Anspruch 2, **dadurch gekennzeichnet, dass** zwischen Längsträger (1) und den Muttern (7) jeweils eine Unterlegscheibe (10) vorgesehen ist, wobei die Unterlegscheiben (10) miteinander verbunden sind.

8. Kraftfahrzeug nach einem der vorhergehenden Ansprüche, **dadurch gekennzeichnet, dass** der Längsträger (1) im Überlappungsbereich verstärkt ist.

9. Kraftfahrzeug nach einem der vorhergehenden Ansprüche, **dadurch gekennzeichnet, dass** der Längsträger (1) in Schalenbauweise aus zwei Blechschalen zusammengesetzt ist, die einen Hohlraum umschließen.

10. Kraftfahrzeug nach Anspruch 9, **dadurch gekennzeichnet, dass** an einer der beiden Schalen zumindest ein Halter (11) mit einer Öse (12) angeschweißt ist, wobei sich der Halter (11) im Hohlraum des Längsträgers (1) befindet und die Öse (12) von einer der Schrauben (6) formschlüssig durchsetzt ist.

## Claims

1. A motor vehicle with at least one hollow longitudinal member (1), attached to the end of which is a bumper (4), a front or a rear module, the bumper (4), the front or the rear module having a fastening portion (5), which is positively inserted in the end region of the hollow longitudinal member (1), at least one screw (6) passing through the overlap region of the fastening portion (5) and the longitudinal member (1) in the transverse direction of the vehicle, **characterised in that** at least three screws (6) pass through the overlap region of the fastening portion (5) and the longitudinal carrier (1) in the transverse direction of the vehicle, a flat washer (9) being provided in each case between the heads of the screws (6) and the longitudinal carrier (1), the flat washers (9) being rigidly connected to one another.

2. A motor vehicle according to claim 1, **characterised in that** the screw (6) is secured by at least one nut (7) on the side of the longitudinal member (1) opposing a head of the screw (6).

3. A motor vehicle according to claim 1 or claim 2, **characterised in that** bushings (8), through which the screw (6) is guided, are inserted on both sides into the fastening portion (5).

4. A motor vehicle according to claim 3, **characterised in that** the bushings (8) comprise a material with a higher strength than the longitudinal member (1).

5. A motor vehicle according to claim 3 or claim 4, **characterised in that** the bushings (8) have a collar, with which they rest on the outside of the fastening portion (5).

6. A motor vehicle according to claim 5, **characterised in that** the collar of the bushings (8) has grooves on one or both sides.

7. A motor vehicle according to claim 2, **characterised in that** a flat washer (10) is provided in each case between the longitudinal member (1) and the nuts (7), the flat washers (10) being connected to one another.

8. A motor vehicle according to any one of the preceding claims, **characterised in that** the longitudinal member (1) is reinforced in the overlap region.

9. A motor vehicle according to any one of the preceding claims, **characterised in that** the longitudinal member (1) is assembled in a shell construction from two sheet metal shells, which surround a cavity.

10. A motor vehicle according to claim 9, **characterised in that** at least one holder (11) with an eyelet (12) is welded on one of the two shells, wherein the holder (11) is located in the cavity of the longitudinal member (1) and one of the screws (6) positively passes through the eyelet (12).

## Revendications

1. Véhicule automobile comportant au moins un longeron creux (1) dont une extrémité est munie d'un pare-choc (4), d'un module frontal ou d'un module arrière,
* le pare-choc (4), le module frontal ou le module arrière comportent un segment de fixation (5) emmanché par une liaison par la forme dans la zone d'extrémité du longeron creux (1),
* la zone de chevauchement entre le segment de fixation (5) et le longeron (1) est traversée par au moins une vis (6) dans la direction transversale du véhicule,
véhicule **caractérisé en ce que**
la zone de chevauchement entre le segment de fixation (5) et le longeron (1) est traversée par au moins trois vis (6) dans la direction transversale du véhicule,
* une rondelle (9) étant interposée entre la tête des vis (6) et le longeron (1),
* les rondelles (9) étant reliées solidairement.

2. Véhicule automobile selon la revendication 1,
**caractérisé en ce que**
la vis (6) est fixée avec au moins un écrou (7) sur le côté du longeron (1) à l'opposé de celui de la tête de la vis (6).

3. Véhicule automobile selon la revendication 1 ou 2,
**caractérisé en ce que**
des douilles (8) sont logées des deux côtés dans le segment de fixation (5) pour être traversées par la vis (6).

4. Véhicule automobile selon la revendication 3,
**caractérisé en ce que**
les douilles (8) sont en un matériau plus résistant que celui du longeron (1).

5. Véhicule automobile selon la revendication 3 ou 4,
**caractérisé en ce que**
les douilles (8) ont une collerette par laquelle elles s'appuient sur l'extérieur du segment de fixation (5).

6. Véhicule automobile selon la revendication 5,
**caractérisé en ce que**
la collerette des douilles (8) comporte des cannelures sur une face ou sur les deux faces.

7. Véhicule automobile selon la revendication 2,
**caractérisé par**
une rondelle (10) prévue respectivement entre le longeron (1) et les écrous (7),
* les rondelles (10) étant reliées.

8. Véhicule automobile selon l'une des revendications précédentes,
**caractérisé en ce que**
le longeron (1) est renforcé dans la zone de chevauchement.

9. Véhicule automobile selon l'une des revendications précédentes,
**caractérisé en ce que**
le longeron (1) a une structure en caisson formée de deux coques en tôle assemblées entourant un volume creux.

10. Véhicule automobile selon la revendication 9,
**caractérisé en ce que**
l'une des deux coques comporte au moins un support (11) avec un oeillet (12) soudé,
* le support (11) se trouve dans la cavité du longeron (1) et l'oeillet (12) est traversé par la vis (6) par une liaison par la forme.
